Europäisches Patentamt

(19) European Patent Office

Office européen des brevets

(11) Numéro de publication : **0 076 767**
**B1**

(12) # FASCICULE DE BREVET EUROPÉEN

(45) Date de publication du fascicule du brevet :
16.04.86

(21) Numéro de dépôt : **82401840.2**

(22) Date de dépôt : **07.10.82**

(51) Int. Cl.⁴ : **G 05 D 16/06**, G 05 D  7/01,
G 01 F  15/02

(54) Appareil régulateur-compteur de débits de gaz.

(30) Priorité : **07.10.81 FR 8118888**

(43) Date de publication de la demande :
**13.04.83 Bulletin 83/15**

(45) Mention de la délivrance du brevet :
**16.04.86 Bulletin 86/16**

(84) Etats contractants désignés :
**BE DE GB IT NL**

(56) Documents cités :
**FR-A- 1 264 276**
**FR-A- 2 341 131**
**GB-A-  648 302**
**US-A- 2 026 704**

(73) Titulaire : **GAZ DE FRANCE**
**23, rue Philibert Delorme**
**F-75017 Paris (FR)**

(72) Inventeur : **Cornil, Jean-Philippe**
**38bis rue Desaix**
**F-78800 Houilles (FR)**

(74) Mandataire : **Thévenet, Jean-Bruno et al**
**Cabinet BEAU DE LOMENIE 55 rue d'Amsterdam**
**F-75008 Paris (FR)**

Jouve, 18, rue St-Denis, 75001 Paris, France

## Description

La présente invention concerne un appareil régulateur-compteur de débits de gaz dans une conduite principale, du type comprenant :

une tuyère principale convergente-divergente montée dans la conduite principale et utilisée en régime sonique, laquelle tuyère est à écoulement axial et formée, d'une part, par un premier élément creux de révolution servant de siège au clapet principal et présentant une paroi interne qui, dans le sens d'écoulement de gaz, possède une partie tronconique amont convergente vers un col cylindrique servant de siège audit clapet principal et une partie aval divergente à partir dudit col et, d'autre part, par un deuxième élément de révolution qui est disposé coaxialement au moins partiellement à l'intérieur du premier, sert de clapet principal et est constitué d'une pièce mobile en forme d'ogive dont la partie située en amont de son diamètre maximal et en amont du col délimite un espace convergent, et dont la partie située en aval de son diamètre maximal et dudit col délimite un espace divergent avec les parties correspondantes du premier élément, ces espaces convergent et divergent étant de section annulaire ;

un système de commande du clapet principal, système muni d'une membrane principale solidaire du clapet par l'intermédiaire d'une tige de liaison, soumise à la force d'un ressort de tarage agissant à l'encontre de la pression appliquée à la membrane à partir de la conduite principale et séparant de façon étanche deux chambres dont l'une est raccordée à ladite conduite principale ;

une tuyère auxiliaire de constitution et de forme analogues à celles de la tuyère principale, montée dans une conduite de dérivation de la conduite principale, raccordée à celle-ci de part et d'autre de la tuyère principale et présentant un premier élément creux convergent-divergent dont le col sert de siège de clapet et un deuxième élément qui sert de clapet dérivé et est solidaire de la membrane principale ; ainsi qu'un compteur de gaz monté dans la conduite de dérivation en aval de la tuyère auxiliaire.

Des appareils régulateurs-compteurs de ce type sont connus, par exemple par le brevet français 7 604 039 (2 341 131). Dans un tel appareil, la fonction régulation de pression est obtenue au moyen d'un dispositif pneumatique appelé « pilote » dont le rôle est de trouver à chaque instant l'équilibre entre :

la consigne, affichée généralement par le tarage d'un ressort,

la pression à réguler, obtenue par l'action du pilote sur le servomoteur, ou système de commande, du régulateur, lequel va provoquer le positionnement correct de l'organe de réglage (tuyère variable).

Ce principe d'asservissement étant très classique, il est inutile de le décrire en détail.

La fonction comptage est remplie, dans ces appareils connus, par un système pneumatique comprenant une tuyère auxiliaire montée en dérivation en amont de la tuyère principale ainsi qu'un compteur sec ou un compteur à pistons rotatifs fonctionnant à la pression de livraison de 21 ou 300 mbars.

Les appareils régulateurs-compteurs dits pilotés bien conçus sont, en général, insensibles aux variations de pression amont et de débit, ceci dans les limites de la course possible de l'organe de réglage (ouverture de clapet). Cela se traduit par un très faible écart entre la pression de consigne et la pression régulée.

Par contre, de par leur conception, ces appareils régulateurs-compteurs connus présentent des temps de réponse relativement long, ce qui les exclut des installations à fonctionnement cyclique (chaufferie) ; ceci est le principal inconvénient.

On peut également constater un prix de deux à trois fois plus élevé que celui des appareils à action directe, surtout dans les petits calibres dont la partie pilote, qui est « incompressible », représente plus de la moitié du prix.

Pour ces deux raisons, il était exclu d'envisager l'utilisation d'un appareil régulateur-compteur piloté pour alimenter des chaufferies de faible ou moyenne puissance, alors que ce secteur représente la majorité des régulateurs vendus notamment en France.

On connaît encore par le document de brevet US-A-2 026 704 une vanne comprenant une membrane séparant des première et deuxième chambres, la première chambre étant reliée à la partie aval de la conduite principale de façon que la pression régnant dans cette chambre agisse dans le sens de la fermeture du clapet principal tandis que la seconde chambre est reliée à l'atmosphère. Ce genre de vanne n'est cependant pas prévu pour être intégré tel quel dans un appareil régulateur-compteur du type mentionné plus haut.

Par ailleurs, le document de brevet FR-C-1 264 276 divulgue un régulateur de pression à commande par membrane, qui met en œuvre une membrane de travail et une membrane de compensation et dans lequel un ressort d'asservissement entoure sans contact le ressort de tarage et s'appuie contre la membrane de travail en vue de limiter le déplacement de ladite membrane. Dans un tel régulateur de pression, la pression aval est toutefois envoyée à la chambre située entre les membranes de travail et de compensation par l'intermédiaire d'alésages ménagés dans le clapet et la tige de clapet, de sorte que la membrane de compensation est en contact sur l'une de ses faces avec la pression amont et sur l'autre de ses faces avec la pression aval.

Le document de brevet GB-A-648302 décrit une vanne régulatrice de pression comportant un clapet principal et un clapet auxiliaire, ainsi qu'une conduite reliant la partie aval de la conduite principale à l'une des chambres séparées par la membrane principale. La structure particulière des clapets est cependant incompatible avec celle des clapets de l'appareil régulateur-compteur du type mentionné en tête de la description.

La présente invention supprime les inconvénients précités et propose de réaliser un appareil régulateur-compteur adapté au fonctionnement par tout ou rien et présentant les qualités des régulateurs classiques existants, à savoir :

régulation correcte dans une fourchette de ± 5%,

faible surpression à la fermeture (temps de réponse rapide),

coût analogue à un appareil classique comprenant par exemple un régulateur et un compteur à turbine.

Ce but est atteint conformément à l'invention du fait que l'une des chambres séparées par la membrane principale est reliée à la partie aval de la conduite principale de façon que la pression règnant dans cette chambre agisse dans le sens de la fermeture du clapet principal tandis que l'autre chambre est reliée à l'atmosphère ; que le clapet principal est associé à une membrane de compensation soumise en permance d'une part, à la pression règnant en amont du clapet principal et, d'autre part, à l'atmosphère, la section transversale active de ladite membrane de compensation étant choisie en fonction des sections transversales actives du clapet principal et du clapet dérivé pour rendre ces clapets insensibles aux variations de la pression amont et que le ressort de tarage s'appuie par une de ses extrémités contre une butée mobile d'un dispositif compensateur qui maintient sensiblement constante la force de compression préréglée du ressort de tarage malgré la course variable d'ouverture du clapet principal.

Grâce à cette conception, on obtient un appareil régulateur-compteur insensible aux variations de pression amont, à réponse rapide et susceptible de fournir du gaz avec une pression aval sensiblement constante tout en permettant de façon simple le comptage du débit de gaz.

Selon une autre caractéristique particulière de l'invention, le clapet de la tuyère principale comprend un alésage coaxial borgne qui débouche dans la partie aval de la conduite principale et qui est raccordée, à l'aide de conduits de liaison pratiqués dans l'ogive du clapet principal, à la partie amont de ladite conduite principale, le premier élément de la tuyère auxiliaire est monté de façon étanche et coulissante dans l'alésage borgne du clapet principal de sorte que la conduite de dérivation passe à travers le clapet principal, et le clapet ogival dérivé est fixé coaxialement au clapet principal et monté à l'intérieur de l'alésage borgne de celui-ci.

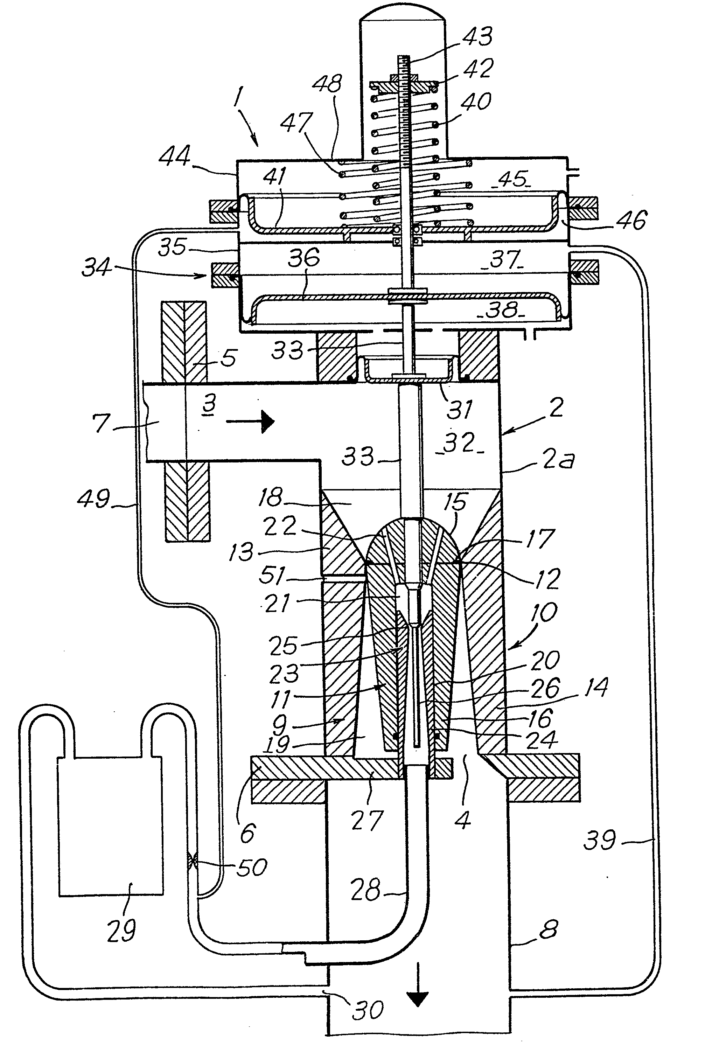

L'objet de l'invention et d'autres caractéristiques de l'invention seront encore mieux compris à l'aide de la description suivante d'un mode de réalisation de l'appareil selon l'invention, cette description étant faite en référence au dessin annexé sur lequel la figure unique représente schématiquement l'appareil régulateur-compteur conforme à l'invention.

Comme on peut le voir sur le dessin, l'appareil 1 comprend un corps tubulaire 2 dont les orifices d'entrée 3 et de sortie 4 sont disposés à axes orthogonaux et sont munis de brides 5 et 6 à l'aide desquelles ils sont raccordés respectivement aux tronçons amont 7 et aval 8 de la conduite principale allant d'une source de gaz à un point d'utilisation. Dans la partie verticale 2a du corps tubulaire 2, partie verticale 2a associée à l'orifice et à la bride de sortie 6, est monté, à poste fixe le premier élément creux extérieur de révolution 9 d'une tuyère principale 10 dans lequel peut se déplacer un deuxième élément de révolution 11 qui est disposé coaxialement au moins partiellement à l'intérieur du premier élément 9.

Le deuxième élément 11 sert notamment de clapet principal coopérant avec un siège de clapet principal formé par un col cylindrique intérieur 12 du premier élément 9 présentant une paroi interne qui, dans le sens d'écoulement de gaz, possède une partie tronconique convergente 13 en direction du col intérieur 12 et, à partir de ce col 12, une partie aval divergente 14 en direction de l'orifice de sortie 4. Le clapet principal 11 est constitué d'une pièce mobile en forme d'ogive dont la partie supérieure 15 est une calotte notamment hémisphérique ou un cône à laquelle se raccorde vers l'orifice de sortie 4 une partie tronconique 16 s'amincissant vers ledit orifice 4. La zone de jonction entre la partie supérieure 15 et la partie inférieure 16 est située en dessus du col intérieur 12 et est munie d'un joint 17 jouant le rôle de clapet en coopération avec son siège matérialisé par l'arête supérieure du col intérieur 12.

Comme on peut le voir sur le dessin, la partie supérieure 15 du deuxième élément 11, partie 15 située au-dessus ou en amont du diamètre maximal dudit deuxième élément 11 et en amont du col 12 délimite avec la partie correspondante 13 du premier élément 9 un espace annulaire 18 convergent en direction du col 12 tandis que la partie inférieure 16 dudit deuxième élément 11, partie 16 située en dessous du diamètre maximal dudit deuxième élément 11 et en dessous dudit col 12, délimite avec la partie correspondante inférieure 14 du premier élément 9 un espace annulaire 19 divergent en direction de l'orifice de sortie 4.

Dans la partie inférieure 16 du clapet principal 11 est prévu un alésage coaxial borgne 20 qui débouche en direction de l'orifice de sortie 4, c'est-à-dire, en direction du tronçon aval 8 de la conduite principale et dont la chambre de fond 21 située au voisinage de ou dans la partie supérieure 15 du clapet principal 9 est raccordée, par l'intermédiaire de conduits de liaison 22 pratiqués dans la partie supérieure 15 du clapet 9, au tronçon amont 7 de la conduite principale et plus précisément à l'espace annulaire convergent 18 situé en amont du clapet principal 11 et du col 12. Ainsi la chambre de fond 21 est en permanence raccordée au tronçon amont 7 de la conduite principale.

Une tuyère auxiliaire 23 est disposée dans l'alésage borgne cylindrique 20 du clapet principal 11 et est d'une constitution et d'une forme pratiquement analogue à celles de la tuyère principale 10. Cette tuyère auxiliaire 23 comporte donc un premier élément creux 24 à paroi intérieure convergente-divergente dont le col 25 entre les parties convergente et divergente sert de siège de clapet ainsi qu'un deuxième élément 26 monté coaxialement à l'intérieur du premier élément creux 24 et servant de clapet dérivé en coopération avec ledit col 25. Le premier élément creux 24 est disposé dans l'alésage borgne cylindrique 20 de telle sorte que le clapet principal 11 puisse coulisser de façon étanche par rapport audit premier élément creux 24 dont l'extrémité inférieure ou aval d'une part, est fixée sur un bras radial de support 27 par exemple solidaire de la bride de sortie 6 et, d'autre part, est raccordée à la partie aval 28 d'une conduite de dérivation dont la partie amont passe à travers le clapet principal et est matérialisée par les conduits de liaison 22 et la chambre de fond 21 dudit clapet 11. Dans la partie aval 28 de la conduite de dérivation est monté un petit compteur 29 par exemple du type volumétrique. Il intègre le comptage au moyen d'un petit compteur volumétrique de faible seuil de démarrage (plage d'utilisation de 1 à 50) et insensible aux phénomènes liés à la vitesse que l'on renvontre sur les compteurs à turbine. Il permet de réaliser des postes de détente compacts puisque le comptage se trouve affranchi des problèmes de coudes, longueurs droites, pulsations, etc.. d'où économie.

La sortie 30 du compteur 29 débouche dans le tronçon aval 8 de la conduite principale.

Il faut remarquer que la section de passage offerte par la tuyère auxiliaire 23 est proportionnelle à la section de passage offerte au gaz par la tuyère principale 10 pour une position d'ouverture donnée des clapets 11 et 26 qui, comme précédemment mentionné, sont solidaires l'un de l'autre.

Au-dessus du clapet principal 11 et à l'extrémité supérieure du corps tubulaire 2 qui se trouve au-dessus du ou au même niveau que le point le plus haut de l'orifice d'entrée 3 est montée une membrane de compensation 31 qui, par une de ses faces, délimite partiellement la chambre 32 située en amont du clapet principal 11 et dont l'autre face est reliée à l'atmosphère, cette membrane de compensation 31 étant en outre rendu solidaire du clapet principal 11 à l'aide d'une tige de liaison 33. Le rôle de la membrane de compensation 31 consiste dans l'annulation de la poussée dans le sens de la fermeture du clapet principal 11, poussée résultant de la pression régnant dans la chambre amont 32 et agissant sur la section active offerte par le clapet principal 11.

Au-delà de la membrane de compensation 31, la tige de liaison 33 raccorde le clapet principal 11 à un système de commande 34 qui comprend à l'intérieur d'une enceinte 35 une membrane principale 36 qui est donc également solidaire du clapet principal 11 et qui, à l'intérieur de cette enceinte 35, sépare de façon étanche deux chambres 37, 38 dont l'une (37) située au-dessus de ladite membrane principale 36, communique en permanence avec le tronçon aval 8 de la conduite principale par l'intermédiaire d'un conduit d'impulsion aval 39, et dont l'autre (38) est raccordée à l'atmosphère. Ainsi, la membrane principale 36 agît sur le clapet principal 11 dans le sens de sa fermeture. Pour maintenir ouvert le clapet principal 11 à l'encontre de la pression appliquée à la membrane principale 36, à partir du tronçon aval 8 de la conduite principale, ladite membrane 36 et ledit clapet 11 sont soumis à la force d'un ressort de tarage 40 qui prend appui contre, d'une part, une butée mobile 41 dont la position est réglée en fonction de la course d'ouverture du clapet principal 11, et d'autre part une contre-butée 42 montée de façon pré-réglable sur une tige de commande 43 qui, coaxialement à la tige de liaison 33, est fixée sur la membrane principale 36 et traverse de façon étanche la paroi de la chambre supérieure 37.

La tige de commande 43 est logée dans une deuxième enceinte 44 superposée à la première enceinte 34 et traverse également de façon étanche la butée mobile 41 qui est disposée dans cette deuxième enceinte 44 et est matérialisée par une membrane d'asservissement divisant celle-ci de façon étanche en deux chambres 45, 46 dont la chambre supérieure 45 contient le ressort de tarage 40, la contre-butée 42 et la partie supérieure de la tige de commande 43. Dans cette chambre supérieure 45 est également prévu un ressort d'asservissement 47 qui entoure sans contact le ressort de tarage 40 et prend appui contre, d'une part, la membrane d'asservissement 41 et, d'autre part, une paroi 48 de la chambre supérieure 45 qui est reliée, en permanence, à l'atmosphère.

La chambre inférieure 46, dite chambre d'asservissement, de la deuxième enceinte 44 est raccordée au tronçon 28 de la conduite de dérivation, tronçon situé entre la tuyère auxiliaire 23 et le compteur 29, par l'intermédiaire d'un conduit d'asservissement 49 connecté à la conduite de dérivation 28 en aval de la tuyère auxiliaire 23 et en amont d'un organe de réglage 50 de la pression d'asservissement, organe monté dans ladite conduite 28. La butée mobile 41 et les différents éléments 44 à 50 font donc partie d'un dispositif compensateur qui est associé au ressort de tarage 40 et maintient sensiblement constante la force de compression préréglée du ressort de tarage 40 malgré la course variable d'ouverture du clapet principal 11 et par conséquent du clapet dérivé 26. L'organe de réglage 50 comprend un orifice de passage qui présente une section de passage réglable et qui est prévu dans la conduite de dérivation 28 en amont du compteur 29. Le rôle du ressort d'asservissement 47 est de limiter le déplacement de la membrane d'asservissement 41 sous l'effet de la pression d'asservissement régnant dans la chambre inférieure 46 contre le fond de laquelle repose ladite membrane 41 lorsque la force du ressort 47 et celle du ressort 40 prédominent.

Du fait que la tuyère principale 10 présente un profil de tuyère venturi, on peut associer à l'appareil un système anti-surpression tel que décrit dans le brevet français 7 317 815 sans modification importante de l'appareil. En effet, il suffit de pratiquer un orifice de raccordement 51 à proximité du col sonique 12 de la tuyère principale 10 pour obtenir les dépressions nécessaires au fonctionnement du système anti-surpression.

On va maintenant décrire le fonctionnement de l'appareil.

Pour faciliter la compréhension, nous reprendrons le terme « d'équipage mobile » pour parler de l'ensemble : clapets 11, 26 — tige de liaison 33 — tige de commande 43 — membrane de compensation 31 — membrane principale 36.

1°) Position fermeture des clapets 11 et 26

Le gaz est admis par l'orifice d'entrée 3 à une pression P. Cette pression exerce une poussée sur les clapets 11 et 26 égale à $P \times (S + s)$, S et s étant les sections actives respectives des clapets 11 et 26.

Cette poussée sera équilibrée par l'action de la pression P sur la membrane de compensation 31 dont la section $S' = (S + s)$.

Cette disposition a pour objectif de rendre l'appareil insensible aux variations de la pression amont.

2°) Position ouverte des clapets 11 et 26

Pour provoquer l'ouverture des clapets 11 et 26, il est nécessaire d'exercer une traction dirigée de bas en haut sur « l'équipage mobile » 11, 26, 33, 43, 31 et 36. Cette traction sera obtenue en comprimant le ressort de tarage 40 prenant appui sur la tige de commande 43.

Dans ces conditions, l'ouverture du clapet principal 11 provoque une montée de pression dans le tronçon aval 8 qui va agir sur la membrane principale 36 par l'intermédiaire du conduit d'impulsion aval 39 jusqu'à l'obtention d'un équilibre entre la force développée par le ressort de tarage 40 et la force résultant de l'action de la pression aval sur la surface de la membrane principale 36.

De cette façon, on comprend que chaque variation de pression à l'aval, de la tuyère principale 10 sera, à chaque instant, détectée directement par la membrane principale 36 et équilibrée par réaction du ressort de tarage 40. Ce type de fonctionnement est appelé « action directe ».

3°) Rôle de la membrane d'asservissement 41.

Dans un appareil régulateur à action directe pure, commandé par ressort, à chaque position d'équilibre de « l'équipage mobile », donc à chaque valeur du débit, correspond une certaine compression du ressort de tarage. Pour des débits différents, la position du clapet principal est différente et, partant, la compression du ressort de tarage également ; la force ainsi développée équilibre des pressions aval légèrement différentes. Ceci a donc pour conséquence une chute de la pression aval sensiblement proportionnelle à la course du clapet principal, donc au débit appelé.

L'idéal serait de remplacer le ressort par une masse ; ainsi la pression régulée délivrée dans le tronçon aval 8 de la conduite principale ne serait plus liée à la course du clapet principal et donc à la modification de la compression du ressort de tarage. Cette solution a été utilisée pour des faibles pressions (20 mbar), mais elle est incompatible avec des pressions supérieures où les charges développées se situent entre 1 000 et 10 000 N. Le problème d'encombrement des charges devient alors insurmontable.

De cette constatation, il découle que l'emploi d'un ressort de tarage est la seule solution économique envisageable bien que non satisfaisante.

Le dispositif compensateur proposé par la présente invention a donc pour but de rendre satisfaisant un système qui ne l'est pas totalement.

Si l'on considère l'appareil régulateur en position fermée des clapets 11 et 26 (course = 0 mm) ; la charge C du ressort de tarage 40 est égale à :

$$C = pa \times \varepsilon \qquad (1)$$

où

$pa$ = pression aval dans le tronçon aval 8 et $\varepsilon$ = section de la membrane principale 36.

Lorsque les clapets 11 et 26 de l'appareil régulateur sont ouverts, le nouvel équilibre devient :

$$C - \Delta c = (pa - \Delta pa) \times \varepsilon \qquad (2)$$

Cette équation (2) montre que chaque variation de charge $\Delta C$ entraîne une variation $-\Delta pa$ sur la pression aval.

Pour retrouver l'état initial de l'équation, (1), il est nécessaire d'introduire une variation positive de $\Delta C$ correspondant à une action de $+ \Delta pa$ sur une section $\varepsilon' = \varepsilon$, dirigée dans le sens opposé. Cette action sera obtenue au moyen de la membrane d'asservissement 41.

Le ressort de tarage 40 prend appui sur le plateau de la membrane d'asservissement 41 pour agir sur la tige de commande 43 laquelle provoque le déplacement de l'équipage mobile 11, 26, 33, 43, 31 et 36. Il faut noter que la membrane 41 n'est pas solidaire de l'équipage mobile 11, 26, 33, 43, 31 et 36.

A la fermeture des clapets 11 et 26, cette membrane d'asservissement 41 est soumise à l'action de la pression aval par l'intermédiaire du conduit d'asservissement 49. Cette action est neutralisée par la charge développée en sens contraire sur la membrane 41 par le ressort de tarage 40.

En position ouverte des clapets 11 et 26, cette membrane d'asservissement 41 reçoit une pression plus élevée que pa, obtenue par le réglage de l'orifice de passage de l'organe de réglage 50.

On agira sur l'organe de réglage 50 de telle sorte que cette surpression Δpa sera sensiblement égale à l'écart que l'on aurait constaté sur la pression aval sans le dispositif compensateur 44 à 50.

Exemple :

Supposons qu'une course de clapet principal 11 de 10 mm entraîne une chute Δpa de la pression aval de 20 mbar. Il faudra régler l'orifice de l'organe de réglage 50 de façon à introduire sous la membrane d'asservissement 41 une pression pa + 20 mbar.

L'action de ces 20 mbar (Δpa) aura pour effet de remonter le plateau de la membrane d'asservissement 41 de 10 mm, donc de compenser la variation de charge (Δc) du ressort de tarage 40.

Pour simplifier, on peut dire que le système consiste à faire travailler un ressort sur une charge constante en faisant déplacer son point d'appui d'une valeur égale à la variation de flèche que l'on aurait obtenue sans le système.

Mais tout cela est théorique, car la description du système repose sur des équilibres parfaits ; or, en régulation, l'équilibre parfait est source d'instabilité, c'est pour cette raison qu'on a prévu le ressort d'asservissement 47 qui sert à limiter l'action de la membrane d'asservissement 41.

Pour appliquer une pression pa + Δpa à la membrane d'asservissement 41, on raccorde le conduit d'asservissement 49 à l'aval de la tuyère auxiliaire 23 et à l'amont de l'organe de réglage 50. On sait qu'à ce niveau transite, à chaque instant, un débit directement proportionnel au débit principal traversant la tuyère principale 10 et, dans une bonne mesure, à la course de l'équipage mobile 11, 26, 33, 43, 31 et 36 donc à la variation de charge du ressort de tarage 40.

L'appareil régulateur-compteur ainsi réalisé permet le fonctionnement par tout ou rien que l'on rencontre dans les installations de chauffe.

Des modifications peuvent être apportées au mode de réalisation décrit sans que l'on sorte du cadre de protection déterminé par les revendications.

**Revendications**

1. Appareil régulateur-compteur de débits de gaz dans une conduite principale, du type comportant :

une tuyère principale (10) convergente-divergente montée dans la conduite principale et utilisée en régime sonique, laquelle tuyère est à écoulement axial et formée, d'une part, par un premier élément creux de révolution (9) servant de siège au clapet principal et présentant une paroi interne qui, dans le sens d'écoulement de gaz, possède une partie tronconique amont (13) convergente vers un col cylindrique (12) servant de siège audit clapet principal et une partie aval (14) divergente à partir dudit col (12) et, d'autre part, par un deuxième élément de révolution (11) qui est disposé coaxialement au moins partiellement à l'intérieur du premier (9), qui sert de clapet principal et est constitué d'une pièce mobile en forme d'ogive dont la partie située en amont de son diamètre maximal et en amont du col délimite un espace convergent (18), et dont la partie située en aval de son diamètre maximal et dudit col délimite un espace divergent (19) avec les parties correspondantes du premier élément, ces espaces convergent et divergent (18, 19) étant de section annulaire ;

un système de commande du clapet principal, système muni d'une membrane principale (36) solidaire du clapet par l'intermédiaire d'une tige de liaison (33), soumise à la force d'un ressort de tarage (40) agissant à l'encontre de la pression appliquée à la membrane principale (36) à partir de la conduite principale et séparant de façon étanche deux chambres (37, 38) dont l'une (37) est raccordée à ladite conduite principale ;

une tuyère auxiliaire (23) de constitution et de formes analogues à celles de la tuyère principale (10), montée dans une conduite de dérivation (28) de la conduite principale, raccordée à celle-ci de part et d'autre de la tuyère principale (10) et présentant un premier élément creux convergent-divergent (24) dont le col sert de siège de clapet et un deuxième élément (26) qui sert de clapet dérivé et est solidaire de la membrane principale (36) ;

ainsi qu'un compteur de gaz (29) monté dans la conduite de dérivation (28) en aval de la tuyère auxiliaire (23) ;

caractérisé en ce que l'une (37) des chambres séparées par la membrane principale (36) est reliée à la partie aval (8) de la conduite principale de façon que la pression régnant dans cette chambre (37) agisse dans le sens de la fermeture du clapet principal (11) tandis que l'autre chambre (38) est reliée à l'atmosphère ; que le clapet principal (11) est associé à une membrane de compensation (31) soumise en permanence d'une part, à la pression régnant en amont du clapet principal (11), et, d'autre part, à l'atmosphère, la section transversale active de ladite membrane de compensation (31) étant choisie en fonction des sections transversales actives du clapet principal (11) et du clapet dérivé (26) pour rendre ces clapets insensibles aux variations de la pression amont et que le ressort de tarage (40) s'appuie par une de ses extrémités contre une butée mobile (41) d'un dispositif compensateur qui maintient sensiblement constante la force de compression préréglée du ressort de tarage (40) malgré la course variable d'ouverture du clapet principal (11).

2. Appareil régulateur-compteur selon la revendication 1, caractérisé en ce que le clapet de la tuyère principale (10) comprend un alésage coaxial borgne (20) qui débouche dans la partie aval (8) de la conduite principale et qui est raccordée, à l'aide de conduits de liaison (22) pratiqués dans l'ogive du clapet principal (11), à la partie amont (7) de ladite conduite principale, que le premier élément (24) de la tuyère auxiliaire est monté de façon étanche et coulissante dans l'alésage borgne (20) du clapet principal (11) de sorte que la conduite de dérivation passe à travers le clapet principal (11) et que le clapet ogival dérivé (26) est fixé coaxialement au clapet principal (11) et monté à l'intérieur de l'alésage borgne (20) de celui-ci.

3. Appareil régulateur-compteur selon l'une des revendications 1 et 2, caractérisé en ce que la butée mobile (41) est constituée par une membrane d'asservissement dont la face portant le ressort de tarage (40) est reliée à l'atmosphère et dont l'autre face est soumise à la pression régnant dans un conduit d'asservissement (49) connecté sur la conduite de dérivation (28) entre la tuyère auxiliaire (23) et un organe (50) de réglage de la pression d'asservissement monté dans ladite conduite de dérivation (28).

4. Appareil régulateur-compteur selon la revendication 3, caractérisé en ce qu'un ressort d'asservissement (47) entoure sans contact le ressort de tarage (40) et s'appuie contre la membrane d'asservissement (41) en vue de limiter le déplacement de ladite membrane sous l'effet de la pression d'asservissement.

**Claims**

1. Apparatus for regulating-metering gas flow rates in a main pipe, of the type comprising :

a main convergent-divergent nozzle (10) mounted in the main pipe and used in sonic rate, said nozzle in an axial flow nozzle and is constituted, on the one hand, by a first hollow element of revolution (9) acting as seat for the main valve and having an inner wall, which in the gas flowing direction has an upstream truncated part (13) converging towards a cylindrical neck (12) acting as seat for said main valve, and a downstream part (14) diverging from said neck (12), and on the other hand, by a second element of revolution (11), placed coaxially at least partly inside the first element (9) acting as main valve and is constituted by an ogive-shaped movable part, the part of which situated upstream of its maximum diameter and upstream of the neck defines a convergent space (18), and of which the part situated downstream of its maximum diameter and of said neck defines a divergent space (19) with the corresponding parts of the first element, said convergent and divergent spaces (18, 19) being of annular section ;

a system controlling the main valve, provided with a main diaphragm (36) connected to the valve by way of a connecting rod (33) subjected to the force of a calibration spring (40) acting against the pressure applied to the main diaphragm (36) from the main pipe and separating in tight manner two chambers (37, 38) of which one (37) is connected to said main pipe ;

an auxiliary nozzle (23) of structure and shape similar to that of the main nozzle (10) mounted in a branch pipe (28) of the main pipe, and connected thereto on either side of the main nozzle (10) and having a first hollow convergent-divergent element (24) of which the neck acts as valve seat, and a second element (26) acting as derivative valve and is integral with the main diaphragm (36) ;

and a gas meter (29) mounted in the branch pipe (28) downstream of the auxiliary nozzle (23) ; characterized in that one (37) of the chambers separated by the main diaphragm (36) is connected to the downstream part (8) of the main pipe so that the pressure prevailing in said chamber (37) acts in the direction closing the main valve (11) whereas the other chamber (38) is connected to the atmosphere ; in that the main valve (11) is operationally coupled to a compensation diaphragm (31) permanently subjected on the one hand, to the pressure prevailing upstream of the main valve (11), and on the other hand, to the atmosphere, the active tranversal section of said compensation diaphragm (31) being selected as a function of the active transversal sections of the main valve (11), and of the derivative valve (26) to render said valves insensitive to variations of the upstream pressure, and in that the calibration spring (40) rests by one of its ends against a movable stop member (41) of a compensation device maintaining substantially constant the preregulated compression force of the calibration spring (40) despite the varying opening stroke of the main valve (11).

2. Regulating-metering device according to claim 1, characterized in that the valve of the main nozzle (10) comprises a bling coaxial bore (20) issuing into the downstream part (8) of the main pipe and which is connected, via connecting pipes (22) provided in the ogive of the main valve (11), to the upstream part (7) of said main pipe, in that the first element (24) of the auxiliary nozzle is mounted in tight manner for sliding in the blind bore (20) of the main valve (11) so that the branch pipe goes through the main valve (11), and in that the derivative ogive-shaped valve (26) is fixed coaxially to the main valve (11) and mounted inside the blind bore (20) thereof.

3. Regulating-metering device according to any one of claims 1 and 2, characterized in that the movable stop member (41) is constituted by a control diaphragm, the face of which carrying the calibration spring (40) is connected to the atmosphere, and the other face of which is subjected to the pressure prevailing in a control pipe (49) connected to the branch pipe (28) between the auxiliary nozzle (23) and a member (50) for regulating the control pressure mounted in said branch pipe (28).

4. Regulating-metering device according to claim 3, characterized in that a control spring (47) surrounds contactless the calibration spring (40) and rests against the control diaphragm (41) in order to limit the displacement of said diaphragm under the action of the control pressure.

**Patentansprüche**

1. Vorrichtung zum Regeln und Zählen des Gasdurchflusses in einer Hauptleitung, von der Bauart mit :

einer in der Hauptleitung angebrachten und im Schallbereich verwendeten konvergent-divergenten Hauptdüse (10), wobei die Düse zum Strömen axial ist und zum einen durch ein erstes hohles Rotationselement (9) gebildet ist, das für die Hauptventilklappe als Sitz dient und eine Innenwand aufweist, die in der Gasströmungsrichtung einen zu einem als Sitz für die Hauptventilklappe dienenden, zylindrischen Hals (12) konvergierenden, stromaufwärtigen, kegelstumpfförmigen Teil (13) und einen vom Hals (12) an divergierenden stromabwärtigen Teil (14) besitzt, und zum anderen durch ein zweites Rotationselement (11) gebildet ist, das koaxial zumindest teilweise im Inneren des ersteren (9) angeordnet ist, das als Hauptventiklappe dient und durch ein bewegliches Teil in Spitzkegelform gebildet ist, dessen stromaufwärts seines Maximaldurchmessers und stromaufwärts des Halses liegender Teil einen konvergierenden Raum (18) abgrenzt und dessen stromabwärts seines Maximaldurchmessers und des Halses liegender Teil einen divergierenden Raum (19) mit den entsprechenden Teilen des ersten Elements abgrenzt, wobei diese konvergierenden und divergierenden Räume (18, 19) ringförmigen Querschnitt aufweisen ;

einer Betätigungseinrichtung für die Hauptventilklappe, wobei die Einrichtung mit einer mittels einer Verbindungsstange (33) mit der Ventilklappe fest verbundenen Hauptmembran (36) versehen ist, die der Kraft einer gegen den von der Hauptleitung her auf die Hauptmembran (36) angewendeten Druck wirkenden Ausgleichsfeder (40) unterworfen ist und auf dichte Weise zwei Kammern (37, 38) trennt, von denen die eine (37) mit der Hauptleitung verbunden ist ;

einer Hilfsdüse (23) mit einem Aufbau und einer Form analog jenen der Hauptdüse (10), die in einer Abzweigleitung (28) von der Hauptleitung angebracht ist, die mit dieser auf beiden Seiten der Hauptdüse (10) verbunden ist und ein erstes konvergent-divergentes hohles Element (24), dessen Hals als Ventilklappensitz dient, und ein zweites Element (26) aufweist, das als Umleitventilklappe dient und fest mit der Hauptmembran (36) verbunden ist ;

sowie mit einem in der Abzweigleitung (28) stromabwärts der Hilfsdüse (23) angebrachten Gaszähler (29) ;
dadurch gekennzeichnet, daß die eine (37) der durch die Hauptmembran (36) getrennten Kammern mit dem stromabwärtigen Teil (8) der Hauptleitung so verbunden ist, daß der in dieser Kammer (37) herrschende Druck in der Richtung zum Schließen der Hauptventilklappe (11) wirkt, während die andere Kammer (38) mit der Atmosphäre verbunden ist ; daß die Hauptventilklappe (11) einer Kompensationsmembran (31) zugeordnet ist, die in Permanenz zum einen dem stromaufwärts der Hauptventilklappe (11) herrschenden Druck und zum anderen der Atmosphäre ausgesetzt ist, wobei der aktive Querschnitt der Kompensationsmembran (31) in Abhängigkeit von den aktiven Querschnitten der Hauptventilklappe (11) und der Umleitventilklappe (26) gewählt ist, um diese Ventilklappen unempfindlich auf Veränderungen des stromaufwärtigen Drucks zu machen, und daß die Ausgleichsfeder (40) sich mittels eines ihrer Enden gegen einen beweglichen Anschlag (41) einer Kompensationsvorrichtung stützt, die die voreingestellte Kompressionskraft der Ausgleichsfeder (40) trotz des veränderlichen Öffnungshubs der Hauptventilklappe (11) im wesentlichen konstant hält.

2. Vorrichtung zum Regeln und Zählen nach Anspruch 1, dadurch gekennzeichnet, daß die Ventilklappe der Hauptdüse (10) eine koaxiale Blindbohrung (20) aufweist, die in den stromabwärtigen Teil (8) der Hauptleitung einmündet und die mit Hilfe von im Spitzkegel der Hauptventilklappe (11) gemachten Verbindungsleitung (22) mit dem stromaufwärtigen Teil (7) der Hauptleitung verbunden ist, daß das erste Element (24) der Hilfsdüse auf dichte Weise und in der Blindbohrung (20) der Hauptventilklappe (11) gleitend so angebracht ist, daß die Abzweigleitung durch die Hauptventilklappe (11) verläuft, und daß die spitzkegelförmige Umleitventilklappe (26) koaxial zur Hauptventilklappe (11) befestigt ist und im Inneren der Blindbohrung (20) von dieser angebracht ist.

3. Vorrichtung zum Regeln und Zählen nach einem der Ansprüche 1 und 2, dadurch gekennzeichnet, daß der bewegliche Anschlag (41) durch eine Regelmembran gebildet ist, deren die Ausgleichsfeder (40) tragende Seite mit der Atmosphäre verbunden ist und deren andere Seite dem in einer Regelleitung (49) herrschenden Druck unterworfen ist, die über die Abzweigleitung (28) zwischen der Hilfsdüse (23) und einem Organ (50) zum Regeln des Regeldrucks angeschlossen ist, das in der Abzweigleitung (28) angebracht ist.

4. Vorrichtung zum Zählen und Regeln nach Anspruch 3, dadurch gekennzeichnet, daß eine Regelfeder (47) ohne Kontakt die Ausgleichsfeder (40) umgibt und sich gegen die Regelmembran (41) abstützt zu dem Zweck, die Verstellung der Membran unter der Wirkung des Regeldrucks zu begrenzen.